# EUROPÄISCHE PATENTSCHRIFT

(11) **EP 3 396 918 B1**
(45) Veröffentlichungstag und Bekanntmachung des Hinweises auf die Patenterteilung: **02.12.2020**
(21) Anmeldenummer: 17167685.1
(22) Anmeldetag: 24.04.2017
(51) Int. Cl.: H04L 29/06, G06F 21/62, G06F 21/60

(54) **SENSOR, GERÄT UND VERFAHREN ZUR NUTZUNGSBESCHRÄNKTEN BEREITSTELLUNG VON SENSORDATEN**
SENSOR, DEVICE AND METHOD FOR PROVIDING SENSOR DATA WITH RESTRICTED USE
CAPTEUR, APPAREIL ET PROCÉDÉ DE PRÉPARATION PRIVATIVE DE DONNÉES DE CAPTEUR

(43) Veröffentlichungstag der Anmeldung: 31.10.2018
(73) Patentinhaber: Siemens Aktiengesellschaft, 80333 München (DE)
(72) Erfinder: Falk, Rainer, 85586 Poing (DE); Skubacz, Michal, 82194 Gröbenzell (DE); Wimmer, Martin, 85579 Neubiberg (DE)

(56) Entgegenhaltungen:
- CN-A- 106 372 491
- US-A1- 2014 196 158
- US-B1- 8 456 532

## Beschreibung

Die Erfindung betrifft einen Sensor, ein Gerät und ein Verfahren zur nutzungsbeschränkten Bereitstellung von Sensordaten durch mindestens einen Sensor eines Geräts, insbesondere an ein Anwendungsprogramm.

Geräte in privaten als auch im gewerblichen oder industriellen Umfeld weisen zunehmend Sensoren auf, mit denen eine physikalische Größe, wie Temperatur, Druck, Geschwindigkeit, aber auch Bilder, Töne oder die räumliche Position des Geräts ermittelt werden können. Aus solchen Sensordaten können vielerlei Rückschlüsse auf das Gerät bzw. die Umgebung der Sensoren gezogen werden. Insbesondere werden Sensordaten häufig in Anwendungsprogrammen, beispielsweise zur Navigation, zur Sprachaufzeichnung oder aber zur Überwachung und Steuerung von Haushaltskomponenten, wie beispielsweise Heizung, Fenstern oder Haushaltsgeräten, verwendet. In Industrieanlagen werden über Sensoren Fertigungsprozesse gesteuert oder der Betriebszustand von Maschinen überwacht. Eine Weitergabe von Sensordaten an Unberechtigte ist dabei unerwünscht oder auch sicherheitsgefährdend.

Bei Betriebssystemen von Mobilfunkgeräten, wie Google Android oder Apple iOS ist bekannt, dass Anwendungsprogramme, sogenannte Applikationen, in einer isolierten Ausführungsumgebung ausgeführt werden. Dabei können die Anwendungsprogramme auf Sensordaten entsprechend ihrer Berechtigungen zugreifen. Nur bei Vorliegen einer entsprechenden Berechtigung kann das Anwendungsprogramm auf einen Sensor und damit auf die von Sensor ermittelten Sensordaten des Mobilfunkgeräts zugreifen. So kann der Nutzer des Mobilfunkgeräts einer Anwendung die Berechtigung erteilen, auf einen angeschlossenen tragbaren Pulsmess-Sensor und die von dem Sensor ermittelten Aktivitätsdaten, auf ein Mikrofon des Geräts zur Aufnahme/Aufzeichnung von Sprachdaten oder eine Kamera zur Aufnahme von Bildern oder Videos zuzugreifen. Zur Ermittlung von Positionsdaten kann der Nutzer den Zugriff auf einen Sensor erlauben, der aus Funksignalen von empfangenen Funkantennen eine netzbasierte Positionsangabe ableitet, oder eine Berechtigung zum Zugriff auf einen GPS-Empfänger im Gerät erteilen. Solche Zugriffsberechtigungen beziehen sich somit auf einen Sensor als Ganzes und alle vom Sensor ermittelten Daten.

Es ist aus US 2014/0196158A1 eine Methode zur Zugriffskontrolle auf Sensorinformation für Kommunikationsgeräte bekannt, um die Privatsphäre von Nutzern zu schützen.

Aus US 8 456 532 B1 ist eine Methode und ein System zur Vermeidung einer Transkodierung eines Videosignals von einer Kamera bei einem Klientgerät bekannt, wobei mehrere Datenströme mit jeweils eigener Konfiguration von der Kamera einem Webserver bereitgestellt werden und der Webserver anhand der Konfiguration erkennt, welcher Datenstrom vom Klientgerät empfangen werden kann.

Des Weiteren ist aus der US 2015/0248566 A1 bekannt, dass ein Sensor zum Schutz der Privatsphäre in einen "private Mode"-Betriebsmodus lediglich Ersatzdaten statt echter Sensormessdaten bereitstellt.

In Industrieanlagen, wie Automatisierungsanlagen oder auch Produktions- und Stromerzeugungsanlagen, werden Sensoren zur Steuerung von Prozessen oder zur Überwachung des Zustandes einer Anlage verwendet. Solche Daten werden entweder direkt vom Sensor, beispielsweise einem intelligenten Sensor, in einem Gerät an den der Sensor angeschlossen oder integriert ist oder aber über ein Datennetzwerk in einer entfernt gelegenen Überwachungseinheit gesammelt und ausgewertet. Dabei ermöglichen besonders genaue oder auch zeitlich hochaufgelöste Sensormesswerte Analysen, beispielsweise um Wartungsintervalle vorherzusagen oder Prozesse zu optimieren, die mit weniger genauen Sensordaten nicht möglich oder zumindest nicht so präzise möglich wären.

Der Zugriff auf beispielsweise hochgenaue oder hochauflösende Sensordaten sollte jedoch nicht uneingeschränkt verfügbar sein. Oft reichen auch weniger präzise Sensordaten aus, um eine gewünschte Information, beispielsweise durch ein Anwendungsprogramm, zu ermitteln. Auch könnte ein Unbefugter die hochpräzisen Daten zur Manipulation einer Anlage missbrauchen.

Es ist somit die Aufgabe der vorliegenden Erfindung eine Möglichkeit zu schaffen, den Zugriff auf hochpräzise Sensordaten in Industrieanlagen kontrollieren und einschränken zu können bzw. bereitgestellte Sensordaten bezüglich ihrer Genauigkeit beschränken zu können.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zur nutzungsbeschränkten Bereitstellung von Sensordaten durch mindestens einen Sensor eines Gerätes umfassend
- ein Bereitstellen mindestens einer Berechtigungsinformation an das Gerät,
- ein Überprüfen der mindestens einen bereitgestellten Berechtigungsinformation,
- ein Einrichten von mindestens einem Konfigurationsparameter des mindestens einen Sensors abhängig von der mindestens einen bereitgestellten Berechtigungsinformation, und
- ein Ausgeben der Sensordaten mit einer den Konfigurationsdaten entsprechenden Güte, wobei ein Konfigurationsparameter eine Güte der vom Sensor bereitgestellten Sensordaten festlegt.

Durch die bereitzustellende Berechtigungsinformation kann ein Anwendungsprogramm oder eine andere die Sensordaten empfangende Einheit nur dann auf beispielsweise hochsensible oder hochgenaue Sensordaten zugreifen, wenn eine entsprechende Berechtigungsinformation verfügbar ist. Ein potentieller Angreifer benötigt somit zusätzlich diese Berechtigungsinformation, um ein Schadprogramm basierend auf solchen Daten betreiben zu können. Durch die bereitzustellende Berechtigungsinformation können andererseits Anwendungsprogramme, beispielsweise für unterschiedlich tiefgreifende oder präzise Analysen, freigeschaltet werden, die je nach Berechtigungsinformation auf mehr oder weniger präzise Sensormesswerte zugreifen dürfen. Entsprechend können Anwendungsprogramme, die auf einer Vorrichtung abgesetzt von den Sensoren durchgeführt werden, eine entsprechende Analyse nur mit Sensordaten von freigeschalteten Geräten beziehungsweise Sensoren durchführen. Somit wird der Zugriff auf Sensordaten eines Sensors durch ein Gerät, wie beispielsweise ein Smart Sensor, ein Feldgerät oder ein Ein-/Ausgabemodul, beziehungsweise der Zugriff durch eine Applikation eines Gerätes erreicht. Durch die Verknüpfung der Berechtigungsinformation mit Konfigurationsparametern eines Sensors, die wiederum die Güte der vom Sensor bereitgestellten Daten festlegt, ist eine direkte Kontrolle der Datengüte möglich.

In einer vorteilhaften Ausführungsform werden lediglich Daten entsprechend der eingestellten Konfigurationsparameter beziehungsweise der eingestellten Güte von dem mindestens einen Sensor detektiert.

Somit liegen lediglich Sensordaten entsprechend der vorgegebenen Güte im Sensor vor. Es ist somit nicht möglich, Sensordaten von höherer Güte unberechtigterweise aus dem Sensor auszulesen.

In einer Ausführungsform werden Sensordaten von dem mindestens einen Sensor entsprechend seiner maximalen Güte detektiert und lediglich die Ausgabe der Daten auf die den eingestellten Konfigurationsparametern entsprechende Güte beschränkt.

Dies erlaubt es für Sensoren, die nicht flexibel bezüglich der Güte der detektierten Messwerte einschränkbar sind, die ausgegebenen Sensordaten dennoch bezüglich der Güte zu beschränken.

Als Sensordaten werden dabei beispielsweise Messwerte bezeichnet, die ein Sensor misst oder detektiert, sowie von diesen Messwerten abgeleitete oder weiterverarbeitete Werte.

In einer vorteilhaften Ausführungsform betrifft die Güte der Sensordaten ein oder mehrere der nachfolgenden Kriterien. Solche Gütekriterien sind ein unterstützter Messbereich, eine nutzbare Mess- beziehungsweise Abtastrate, eine Repräsentationstiefe der Sensordaten, eine erfolgte Vorverarbeitung der Sensordaten, mindestens einen visuellen Darstellungsparameter, eine Kalibrierung der Sensordaten und/oder Temperaturstabilisierung der Sensordaten.

So kann beispielsweise die Güte eines Spannungssensors über einen unterstützten Messbereich entsprechend einem Konfigurationsparameter, beispielsweise zwischen 0 und 3 Volt oder zwischen 0 und 30 Volt, eingestellt werden. Die Güte eines Beschleunigungssensors kann über den Messbereich eingestellt werden, indem ein Konfigurationsparameter den Messbereich auf maximal eine Erdgravitationsbeschleunigung, als 1g bezeichnet, oder bis zu 10g begrenzt. Bei einem Sensor für elektromagnetische Felder kann die Güte eine Abtastrate beispielsweise zehn Samples pro Sekunde oder eine Million Samples pro Sekunde betreffen. Eine Repräsentationstiefe kann beispielsweise bei digitalen Sensorsignalen beispielsweise 8 Bit oder 12 Bit oder 16 Bit betragen. Die Güte kann durch Konfigurationsparameter, die die erfolgte Vorverarbeitungen betreffen, wie beispielsweise eine erfolgte Signalbearbeitung oder Vorfilterung eines Sensorsignals zum Beispiel durch einen Tiefpassfilter zur Einschränkung des unterstützten Dynamikbereichs oder eine Vorfilterung durch einen Bandpassfilter zur Beschränkung des auswertbaren Frequenzbereichs eingestellt sein. Bei einem Entfernungssensor, beispielsweise durch Radar, Lidar oder Ultraschall, kann über Konfigurationsparameter die Güte durch den nutzbaren Entfernungsmessbereich, beispielsweise zwischen 1 m und 3 m oder zwischen 0,2 m und 30 m definiert sein oder über eine Messrate von beispielsweise einer Messung pro Sekunde oder zehn Messungen pro Sekunde bestimmt werden. Bei einem bildgebenden System mit einem Bildsensor können über Konfigurationsparameter Gütekriterien wie eine Auflösung eines Bildes durch eine Angabe von Pixelanzahl, eine Farbtiefe durch eine Auflösung für Farbdarstellung von beispielsweise 8 Bit oder 16 Bit, ein Farbraum, der Anzahl der erfassbaren Farben, ein Kontrastbereich oder auch ein Helligkeitsbereich einstellbar sein.

Die Güte von Sensorparametern kann ebenfalls eine zeitliche Beschränkung der Bereitstellung der Sensorparameter betreffen. Über entsprechende Konfigurationsparameter kann beispielsweise eine zeitliche Verzögerung der Bereitstellung oder eine Anzahl von Abfragen und damit Ausgaben von Sensordaten oder eine maximale Datenmenge der ausgegebenen Sensordaten oder auch ein Zeitintervall in dem Sensordaten ausgegeben werden beschränkt werden. Somit kann ein zeitlich abgestelltes Lizenzmodell realisiert werden.

In einer vorteilhaften Ausführungsform wird die Berechtigungsinformation kryptographisch geschützt bereitgestellt und lediglich bei positiver Verifizierung wird die Berechtigungsinformation zur Einrichtung von Konfigurationsparametern bereitgestellt.

Dadurch kann der Aussteller und auch der Inhalt der Berechtigungsinformation überprüft werden. Dadurch wird eine Manipulation der Berechtigungsinformation durch unerlaubte Dritte weiter erschwert.

In einer vorteilhaften Ausführungsform werden für einen einzigen Sensor gleichzeitig mehrere Berechtigungsinformationen von unterschiedlichen Anwendungsprogrammen bereitgestellt.

Dies erlaubt, dass ein Sensor unterschiedlichen Anwendungsprogrammen parallel Sensordaten unterschiedlicher Güte liefert.

In einer vorteilhaften Ausführungsform ist mindestens eine Berechtigungsinformation mit einem Anwendungsprogramm selbst verbunden und wird mit der Bereitstellung des Anwendungsprogramms dem Gerät bereitgestellt.

Somit kann in einfacher Weise mit dem Anwendungsprogramm gleichzeitig die Güte der verwendeten Sensordaten bereitgestellt werden. Es ist kein zusätzlicher Bereitstellungsprozess für die Güte der Sensordaten notwendig.

Ein weiterer Aspekt der Erfindung betrifft ein Gerät zur nutzungsbeschränkten Bereitstellung von Sensordaten, umfassend mindestens einen Sensor, der abhängig von mindestens einem eingerichteten Konfigurationsparameter Sensordaten mit unterschiedlicher Güte bereitstellt und eine Überprüfungseinheit, die derart ausgebildet ist, mindestens eine Berechtigungsinformation bereitzustellen und mindestens eine bereitgestellte Berechtigungsinformation zu überprüfen und Konfigurationsparameter des mindestens eines Sensors abhängig von der mindestens einen Berechtigungsinformation einzurichten, und den Konfigurationsparametern entsprechende Sensordaten, insbesondere an ein Anwendungsprogramm auszugeben, wobei der mindestens eine Konfigurationsparameter eine Güte der vom Sensor bereitgestellten Sensordaten festlegt.

Ein solches Gerät ist flexibel bezüglich der bereitgestellten Sensordaten konfigurierbar. Eine Berechtigungsinformation kann beispielsweise in Form einer Lizenzinformation oder als Freischaltcode ausgebildet sein. So lassen sich Geräte mit unterschiedlichem Funktionsumfang, die sich durch die Güte der bereitgestellten Sensordaten unterscheiden, realisieren.

In einer vorteilhaften Ausführungsform detektiert mindestens ein Sensor lediglich Daten abhängig von den eingestellten Konfigurationsparametern bzw. Güte und/oder mindestens ein Sensor detektiert Sensordaten entsprechend seiner maximalen Konfigurationsparameter und beschränkt lediglich eine Ausgabe der Sensordaten auf die eingestellte Konfiguration bzw. Güte.

In einer vorteilhaften Ausführungsform enthält die Überprüfungseinheit des Geräts eine kryptographische Funktion, die eine kryptographisch geschützte Berechtigungsinformation verifiziert und lediglich bei positiver Verifizierung die Berechtigungsinformation an die Überprüfungseinheit bereitstellt.

In einer vorteilhaften Ausführungsform weist ein Sensor eine dediziert zugeordnete eigene Prüfungseinheit auf und die Prüfungseinheit stellt lediglich bei positiver Verifizierung die Berechtigungsinformation der Überprüfungseinheit bereit.

In einer vorteilhaften Ausführungsform wertet eine Überprüfungseinheit die Berechtigungsinformation für mehrere Sensoren aus und eine solche Überprüfungseinheit ist in einer von den Sensoren abgesetzten Steuereinheit ausgebildet.

Dies hat den Vorteil, dass auch relativ einfach strukturierte Sensoren in der Bereitstellung von Daten konfiguriert werden können, ohne selbst eine entsprechende Überprüfungseinheit zu umfassen.

In einer vorteilhaften Ausführungsform ist die Überprüfungseinheit derart ausgebildet, eine Berechtigungsinformation für ein einzelnes Anwendungsprogramm oder für eine Gruppe von Anwendungsprogrammen auf dem Gerät anzuwenden.

Das Gerät kann dabei ein intelligentes Sensorgerät, auch Smart Sensor genannt, sein. Der oder die Sensoren des Geräts können somit über eine kryptographisch geschützte Lizenzinformation beziehungsweise einen kryptographisch gesicherten Freischaltcode auf unterschiedliche eingeschränkte Betriebsarten konfiguriert werden. Dies hat den Vorteil, dass ein physikalisches Sensorgerät abhängig von einem Freischaltcode unterschiedliche Produkteigenschaften aufweist. Dadurch können unterschiedliche Märkte mit gleichem Hardwaresensor aber unterschiedlichen Funktionsumfängen bedient werden.

Ebenso kann eine Realisierung auf einem Feldgerät, beispielsweise einem Internet-of-Things(IoT)-Gerät, einem Ein-/Ausgabemodul, einem Gateway oder einem Steuergerät, erfolgen. Das Gerät selbst verwendet zum Beispiel für eine Diagnosefunktion unterschiedlich eingeschränkte Sensordaten. Diese Einschränkung kann das Gerät einheitlich betreffen, das heißt die Berechtigungsinformation beispielsweise in Form eines Freischaltcodes oder Lizenzcodes, gilt dann für das ganze Gerät, oder es können unterschiedliche Teilfunktionen des Geräts durch die Vergabe unterschiedlicher Berechtigungscodes für jede Teilfunktion oder jedes Anwendungsprogramm auf dem Gerät unterschieden werden. So kann ein erstes Anwendungsprogramm zum Beispiel hochauflösende Sensordaten in hoher Abtastrate auswerten, ein zweites Anwendungsprogramm jedoch nur Sensordaten einer reduzierten Abtastrate mit reduzierter Auflösung auswerten. Das erste Anwendungsprogramm kann dadurch Analysen durchführen, die das zweite Anwendungsprogramm wegen fehlender hochaufgelöster Sensordaten nicht durchführen kann.

Ein weiterer Aspekt der Erfindung betrifft einen Sensor zur nutzungsbeschränkten Bereitstellung von Sensordaten, wobei der Sensor eine Überprüfungseinheit aufweist, die derart ausgebildet ist, mindestens eine bereitgestellte Berechtigungsinformation zu überprüfen, Konfigurationsparameter des Sensors abhängig von der mindestens einen Berechtigungsinformation einzurichten und die Sensordaten mit einer den Konfigurationsparametern entsprechenden Güte, insbesondere an ein Anwendungsprogramm, auszugeben.

Ein weiterer Aspekt der vorliegenden Erfindung betrifft ein Computerprogrammprodukt, das direkt in einen Speicher eines digitalen Computers ladbar ist, umfassend Programmcodeteile, die dazu geeignet sind, die Schritte des beschriebenen Verfahrens durchzuführen.

Ausführungsbeispiele der Erfindung sind in den Zeichnungen beispielsweise dargestellt und werden anhand der nachfolgenden Beschreibung näher erläutert.

Es zeigen:
- Figur 1: ein Ausführungsbeispiel des erfindungsgemäßen Verfahrens als Ablaufdiagramm;
- Figur 2: ein erstes Ausführungsbeispiel eines erfindungsgemäßen Gerätes umfassend mehrere erfindungsgemäße Sensoren mit jeweils eigenen Überprüfungseinheiten in schematischer Darstellung;
- Figur 3: ein zweites Ausführungsbeispiel eines erfindungsgemäßen Gerätes mit teilweise vom Sensor abgesetzten Überprüfungseinheiten in schematischer Darstellung; und
- Figur 4: ein drittes Ausführungsbeispiel eines erfindungsgemäßen Gerätes mit an Anwendungsprogramme gekoppelte Berechtigungsinformationen in schematischer Darstellung.

Einander entsprechende Teile sind in allen Figuren mit den gleichen Bezugszeichen versehen.

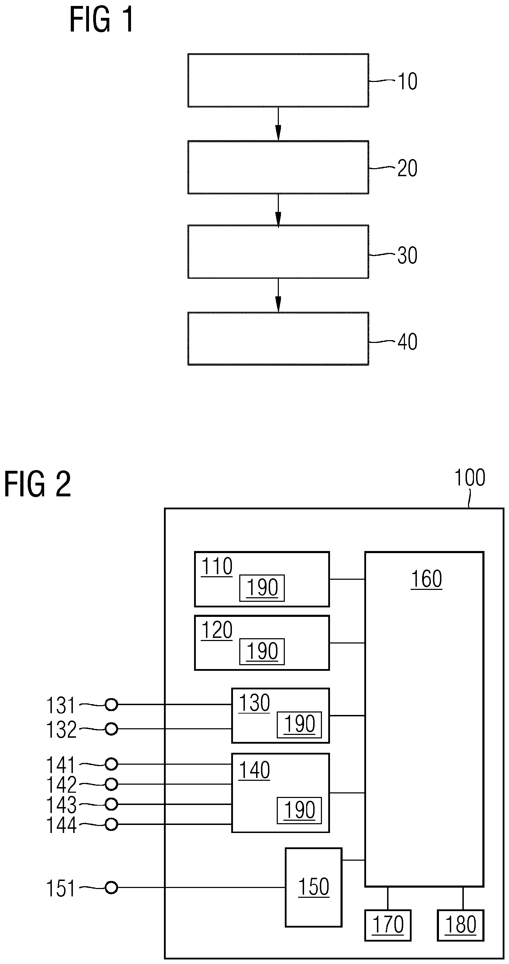

Anhand des in Figur 1 abgebildeten Ablaufdiagramms wird das erfindungsgemäße Verfahren zur nutzungsberechtigten Bereitstellung von Sensordaten durch mindestens einen Sensor eines Geräts erläutert.

In einem Verfahrensschritt 10 wird mindestens eine Berechtigungsinformation dem Gerät bereitgestellt. Im Verfahrensschritt 20 wird die zumindest eine bereitgestellte Berechtigungsinformation überprüft und in Verfahrensschritt 30 mindestens ein Konfigurationsparameter des mindestens einen Sensors abhängig von der mindestens einen bereitgestellten Berechtigungsinformation eingerichtet. Der Konfigurationsparameter legt dabei die Güte der vom Sensor bereitzustellenden Sensordaten fest. Anschließend werden in Schritt 40 die Sensordaten mit einer den Konfigurationsparametern entsprechenden Güte ausgegeben.

Eine Berechtigungsinformation kann dabei die Güte der ausgegebenen Sensordaten beschränken, die die zur weiteren Verwendung an andere Komponenten innerhalb oder außerhalb des Gerätes ausgegeben werden betreffen. Die Berechtigungsinformation kann insbesondere auch die Ausgabe der Sensordaten an ein Anwendungsprogramm betreffen und für Anwendungsprogramme spezifisch sein.

Das Anwendungsprogramm kann entweder auf dem Gerät, das die Sensoren umfasst, ausgeführt werden, oder aber an eine von den Sensoren abgesetzte Vorrichtung übermittelt und von einem dort implementierten Anwendungsprogramm verwendet werden. Die Berechtigungsinformation kann insbesondere kryptographisch geschützt bereitgestellt werden. Beim Überprüfen der Berechtigungsinformation wird dabei beispielsweise eine kryptographische Prüfsumme ausgewertet. Lediglich bei einer positiven Verifizierung der kryptographischen Prüfsumme wird die Berechtigungsinformation zur weiteren Bearbeitung bereitgestellt und Konfigurationsparameter entsprechend der Berechtigungsinformation ausgewählt und aktiviert.

Figur 2 zeigt ein Gerät 100, beispielsweise ein in einer Automationsanlage eingesetztes Feldgerät mit einer Steuereinheit 160, einer Arbeitsspeichereinheit 170 und einer Programm- und Konfigurationsspeichereinheit 180. Das Gerät 100 weist des Weiteren integrierte Sensoren 110 und 120 auf, die beispielsweise als ein Temperatursensor und ein Lichtsensor ausgebildet sind. Weitere Sensoren 131, 132 sind an einer beispielsweise als Analog-/Digitalwandler 130 ausgebildeten Einheit angebunden. Weitere externe Sensoren 141, 142, 143, 144 sind mit einer digitalen Ein-/Ausgabeeinheit 140 verbunden. Des Weiteren weist das Gerät 100 eine Netzwerkschnittstelle 150 auf, über den ein weiterer Sensor 151 verbunden ist. Die internen Sensoren 110, 120, der Analog-/Digitalwandler 130, das der Ein-/Ausgabeeinheit 140 sowie die Netzwerkschnittstelle 150 sind mit der Steuereinheit 160 verbunden.

Das Gerät 100 verfügt über eine Überprüfungseinheit 190 zur Prüfung einer Berechtigungsinformation, die beispielsweise als Freischaltcode oder Lizenzcode bezeichnet werden kann. In der dargestellten Variante weisen die integrierten Sensoren 110 und 120 jeweils eine eigene Überprüfungseinheit 190 auf. Die mindestens eine Berechtigungsinformation für die externen Sensoren 131 und 132 wird über eine Überprüfungseinheit 190, die in dem Analog-/Digitalwandler 130 beziehungsweise für die Sensoren 141 bis 144 in der Ein-/Ausgabeeinheit 140 ausgebildet ist, behandelt. Die Sensordaten des externen Sensors 151 können in diesem Ausführungsbeispiel nicht über eine Berechtigungsinformation beschränkt werden.

Der Überprüfungseinheit 190 wird jeweils eine Berechtigungsinformation bereitgestellt. Die Berechtigungsinformation kann Konfigurationsparameter für den jeweiligen Parameter enthalten und für die Bereitstellung für ein einziges Anwendungsprogramm dienen. In der Überprüfungseinheit 190 können aber auch parallel mehrere Berechtigungsinformationen vorliegen, die zur Ausgabe von Daten an unterschiedliche Anwendungsprogramme die auszugebenden Sensordaten konfigurieren. Somit kann ein Sensor Sensordaten unterschiedlicher Güte entsprechend den unterschiedlichen Konfigurationsparametern bzw. den unterschiedlichen Berechtigungsinformationen ausgeben.

Abhängig von der Berechtigungsinformation wird eine oder mehrere der folgenden Sensorfunktionen beschränkt und somit die Güte der ausgegebenen Sensordaten festgelegt. Der erfassbare Temperaturbereich des integrierten Temperatursensors 110 kann beispielsweise gemäß einer ersten Berechtigungsinformation einer ersten Anwendung und dem entsprechenden Konfigurationsparameter zwischen 20°C und 50°C eingestellt sein. Entsprechend einer alternativen oder parallel vorliegenden Berechtigungsinformation, die einem zweiten Anwendungsprogramm zugeordnet ist, liefert der Temperatursensor 110 Sensordaten in einem Temperaturbereich von -20°C bis -80°C beispielsweise an das zweite Anwendungsprogramm. Bei tatsächlichen Temperaturen außerhalb des freigeschalteten Messbereichs wird nur eine "out-of-range"-Information bereitgestellt. Dadurch kann erreicht werden, dass lediglich ein zweites Anwendungsprogramm, das eine Berechtigungsinformation für einen erweiterten Temperaturbereich bereitstellt, die Umgebungstemperatur beziehungsweise eine Betriebstemperatur im erweiterten Temperaturbereich nutzen kann. Durch eine Berechtigungsinformation kann nicht nur die Bereitstellung von Sensordaten an Anwendungsprogramme, sondern die Bereitstellung von Sensordaten an Komponenten innerhalb und/oder außerhalb des Geräts geregelt werden.

Eine Dynamik des Umgebungslichtsensors 120 kann über eine Berechtigungsinformation freigeschaltet werden. Dadurch kann beispielsweise erreicht werden, dass nur ein Mittelwert über eine Sekunde oder aber über 10 Sekunden ausgegeben werden, oder ob eine zeitlich hochaufgelöste Lichtinformation auswertbar ist. Während mit eingeschränkter Auswertung, beispielsweise eine Anpassung einer Anzeigehelligkeit an eine Umgebungsbeleuchtung möglich ist, ist eine Nutzung für eine schnelle Objekterkennung nicht möglich.

Bei einem Analog-/Digitalwandler 130 kann ein Messbereich, eine Auflösung beziehungsweise Repräsentationstiefe der ausgegebenen Sensordaten, beispielsweise als ein 8 Bit, 12 Bit, 16 Bit oder 24 Bit-Wort, und eine Abtastrate, die die erfassten Messpunkte pro Zeit definiert, über die Berechtigungsinformation freigeschaltet beziehungsweise konfiguriert werden. Bei den Sensoren 141 bis 144, die über die allgemeine digitale Ein-/Ausgangseinheit 140 angebunden sind, kann beispielsweise eine zeitliche Auflösung beschränkt werden. Auch kann ein Sensor beziehungsweise eine Sensorschnittstelle gegebenenfalls komplett deaktiviert werden und somit beispielsweise der Lichtsensor 120 komplett deaktiviert werden, wenn keine gültige Berechtigungsinformation vorliegt.

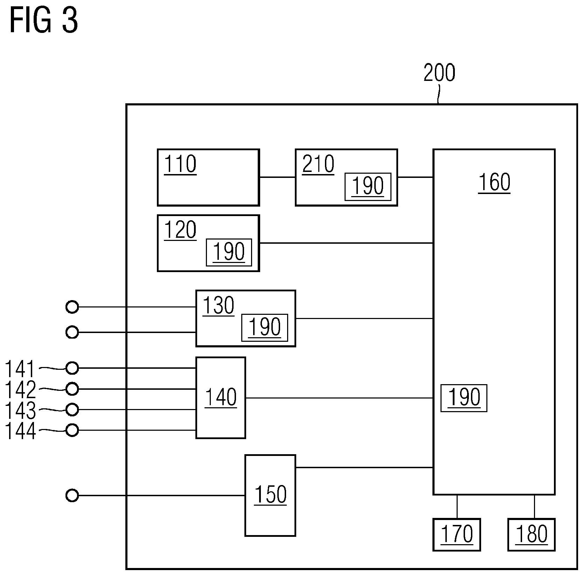

Figur 3 zeigt ein weiteres Gerät 200 mit den gleichen internen (110, 120) und externen Sensoren (131, 132, 141-144, 151) und Komponenten wie in Figur 2. Diese sind mit den gleichen Bezugszeichen wie in Figur 2 bezeichnet. Der Übersichtlichkeit halber wurden die Bezugszeichen für die externen Sensoren (131, 132, 151) nicht mehr dargestellt.

Im Gerät 200 sind Überprüfungseinheiten 190 den unterschiedlichen Komponenten zugeteilt. Dem Temperatursensor 120 ist eine Kryptoeinheit 210 vorgelagert. Die Überprüfungseinheit ist auf der Kryptoeinheit 210 ausgebildet und prüft eine kryptographisch gesicherte Berechtigungsinformation. Lediglich bei positivem Prüfergebnis werden die Berechtigungsinformation weiter bearbeitet und entsprechende Konfigurationsparameter ausgewählt, aktiviert und Sensordaten mit der entsprechenden Güte ausgegeben.

Des Weiteren ist eine Überprüfungseinheit 190 auf der Steuereinheit 160 ausgebildet, um einen Zugriff auf die digitale Ein-/Ausgabeeinheit 140 zu beschränken. Dazu kann beispielsweise ein Bootcode der Steuereinheit 160 die Berechtigungsinformation prüfen und davon abhängig beispielsweise eine Abtastrate auf einem Subsystem der Ein-/Ausgabeeinheit konfigurieren. Somit kann stellvertretend für die digitale Ein-/Ausgabeeinheit 140 die Überprüfungseinheit 190 in der Steuereinheit 160 anhand der Berechtigungsinformation die Güte der Sensordaten jedes einzelnen Sensors 141, 142, 143, 144 gesteuert werden.

In einer weiteren nicht dargestellten Ausführungsform ist das Gerät unter Nutzung einer programmierbaren Digitalschaltung, beispielsweise einer feldprogrammierbaren Gatteranordnung FPGA oder eines System on Chip mit FPGA Subsystem, realisiert. Hier kann die Überprüfungseinheit und damit eine Prüfung der Berechtigungsinformation auf der programmierbaren Digitalschaltung, zum Beispiel in einer Hardware Beschreibungssprache VHDL oder Verilog, realisiert sein.

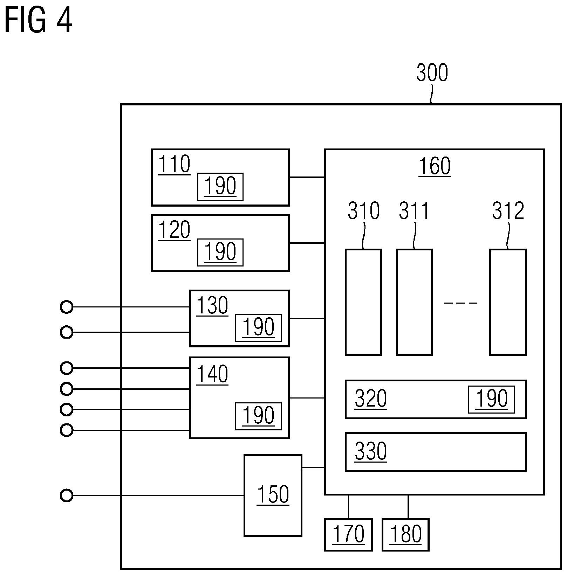

Figur 4 zeigt ein weiteres Beispiel eines Gerätes 300, bei dem die Steuereinheit 160 die Ausführung von Anwendungsprogrammen 310, 311, 312 unterstützt. Anwendungsprogramme 310, 311, 312 können beispielsweise als Docker-Container realisiert sein. Diese werden von einer Anwendungsprogamm-Laufzeitumgebung 320, auch als Application-Runtime-Environment RTE bezeichnet, ausgeführt, das auf einem Betriebssystem 330, beispielsweise Linux, Microsoft Windows IoT oder OpenBSD, aufsetzt. Bei der Laufzeitumgebung 320 kann es sich beispielsweise um eine Docker-Runtime handeln.

Bei Gerät 300 erfolgt eine Prüfung der Berechtigungsinformation für den nutzungsbeschränkten Zugriff auf Sensordaten durch Anwendungsprogramme 310, 311, 312 in einer Überprüfungseinheit 190 in der Laufzeitumgebung 320. Die Prüfung der Berechtigungsinformation kann einschränken, welche nutzungsbeschränkten Sensordaten für Anwendungsprogramme nutzbar sind. Die Überprüfung ist dabei unabhängig von einem spezifischen Anwendungsprogramm.

In einer anderen Variante werden zusätzlich oder alternativ anwendungsspezifische Berechtigungsinformationen unterschieden.

Die Erfindung ermöglicht es, dass besonders "gute Analysen" nur für dafür freigeschaltete Geräte beziehungsweise Anwendungsprogramme möglich sind. Dadurch wird ermöglicht, dass einheitliche Geräte mit unterschiedlichem Funktionsumfang konfiguriert und vermarktet werden können. Dadurch wird der Entwicklungsaufwand verringert und die Produktion und Lagerhaltung werden vereinfacht, da weniger unterschiedliche Gerätetypen gefertigt und vorgehalten werden müssen. Durch die lizenzgesteuerte Zugriffskontrolle durch die Berechtigungsinformation auf Sensordaten ist auch der Schutz geistigen Eigentums möglich. So kann zum Beispiel sichergestellt werden, dass eine Nutzung der Sensordaten beispielsweise für Datenanalysen nur durch authentisierte und autorisierte Prozesse erfolgen dürfen, wodurch Sensorik und daran abgestimmte Algorithmen entsprechend geschützt werden können.

Alle beschriebenen und/oder bezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur nutzungsbeschränkten Bereitstellung von Sensordaten durch mindestens einen Sensor (110, 120, 131, 132, 141-144) eines Feldgerätes einer Automationsanlage (100, 200, 300), umfassend
- ein Bereitstellen (10) mindestens einer Berechtigungsinformation,
- ein Überprüfen (20) der mindestens einen bereitgestellten Berechtigungsinformation,
- ein Einrichten (30) von mindestens einem Konfigurationsparameter des mindestens einen Sensors (110, 120, 131, 132, 141-144) abhängig von der mindestens einen bereitgestellten Berechtigungsinformation, und
- ein Ausgeben (40) von den Konfigurationsparametern entsprechenden Sensordaten (110, 120, 131, 132, 141-144), insbesondere an ein Anwendungsprogramm, wobei der mindestens eine Konfigurationsparameter eine Güte der vom Sensor (110, 120, 131, 132, 141-144) bereitgestellten Sensordaten festlegt, wobei die mindestens eine Berechtigungsinformation kryptographisch geschützt bereitgestellt wird und lediglich bei positiver Verifizierung der mindestens einen kryptographisch geschützten Berechtigungsinformation, wobei ein Aussteller und ein Inhalt der mindestens einen Berechtigungsinformation überprüft werden, die mindestens eine Berechtigungsinformation zum Einrichten der Konfigurationsparameter bereitgestellt wird.

2. Verfahren nach Anspruch 1, wobei lediglich Daten entsprechend der eingestellten Konfigurationsparameter bzw. Güte von mindestens einem Sensor (110, 120, 131, 132, 141-144) detektiert werden.

3. Verfahren nach einem der vorhergehenden Ansprüche, wobei Sensordaten entsprechend seiner maximalen Konfigurationsparameter von mindestens einem Sensor (110, 120, 131, 132, 141-144) detektiert werden und lediglich die Ausgabe der Sensordaten (110, 120, 131, 132, 141-144) auf die eingestellten Konfigurationsparameter bzw. Güte beschränkt wird.

4. Verfahren nach einem der vorhergehenden Ansprüche, wobei die Güte der Sensordaten einen unterstützten Messbereich und/oder eine nutzbare Messrate und/oder eine Repräsentationstiefe der Sensordaten und/oder eine erfolgte Vorverarbeitung der Sensordaten und/oder mindestens einen visuellen Darstellungsparameter und/oder eine Kalibrierung der Sensordaten und/oder Temperatur-stabilisierte Sensordaten betrifft.

5. Verfahren nach einem der vorhergehenden Ansprüche, wobei für einen einzigen Sensor (110, 120, 131, 132, 141-144) gleichzeitig mehrere Berechtigungsinformationen von unterschiedlichen Anwendungsprogrammen bereitgestellt werden.

6. Verfahren nach einem der vorhergehenden Ansprüche, wobei mindestens eine Berechtigungsinformation mit einem Anwendungsprogramm verbunden ist und mit der Bereitstellung des Anwendungsprogramms auf dem Gerät (100, 200, 300) bereitgestellt wird.

7. Feldgerät einer Automationsanlage zur nutzungsbeschränkten Bereitstellung von Sensordaten, umfassend
- mindestens einen Sensor (110, 120, 131, 132, 141-144), der abhängig von mindestens einem eingerichteten Konfigurationsparameter Sensordaten mit unterschiedlicher Güte bereitstellt, und
- eine Überprüfungseinheit (190) die derart ausgebildet ist mindestens eine Berechtigungsinformation bereitzustellen, und mindestens eine bereitgestellte Berechtigungsinformation zu überprüfen und Konfigurationsparameter des mindestens einen Sensors (110, 120, 131, 132, 141-144) abhängig von der mindestens einen Berechtigungsinformation einzurichten, wobei die mindestens eine Berechtigungsinformation kryptographisch geschützt bereitgestellt wird und die Überprüfungseinheit (190) eine kryptographische Funktion enthält, die die mindestens eine kryptographisch geschützte Berechtigungsinformation verifiziert und lediglich bei positiver Verifizierung der mindestens einen kryptographisch geschützten Berechtigungsinformation, wobei ein Aussteller und ein Inhalt der mindestens einen Berechtigungsinformation überprüft werden, die mindestens eine Berechtigungsinformation zum Einrichten der Konfigurationsparameter bereitstellt, und wobei die Überprüfungseinheit (190) weiterhin ausgebildet ist den Konfigurationsparametern entsprechende Sensordaten, insbesondere an ein Anwendungsprogramm, auszugeben, wobei der mindestens eine Konfigurationsparameter eine Güte der von dem mindestens einen Sensor (110, 120, 131, 132, 141-144) bereitgestellten Sensordaten festlegt.

8. Feldgerät einer Automationsanlage nach Anspruch 7, wobei mindestens ein Sensor (110, 120, 131, 132, 141-144) lediglich Daten abhängig von den eingestellten Konfigurationsparametern detektiert und/oder mindestens ein Sensor (110, 120, 131, 132, 141-144) Sensordaten entsprechend seiner maximalen Konfigurationsparameter detektiert und lediglich eine Ausgabe der Sensordaten auf die eingestellte Konfiguration bzw. Güte beschränkt.

9. Feldgerät einer Automationsanlage nach einem der Ansprüche 7 bis 8, wobei ein Sensor (110, 120, 131, 132, 141-144) eine dediziert zugeordnete eigene Überprüfungseinheit (190) aufweist und die Überprüfungseinheit (190) lediglich bei positiver Verifizierung der kryptographisch geschützten Berechtigungsinformation die Berechtigungsinformation zur Einrichtung von Konfigurationsparameter bereitstellt.

10. Feldgerät einer Automationsanlage nach einem der Ansprüche 7 bis 9, wobei eine Überprüfungseinheit (190) Berechtigungsinformation für mehrere Sensoren (110, 120, 131, 132, 141-144) auswertet und eine solche Überprüfungseinheit (190) in einer von den Sensoren (110, 120, 131, 132, 141-144) abgesetzten Steuerungseinheit (160) ausgebildet ist.

11. Feldgerät einer Automationsanlage nach einem der Ansprüche 7 bis 10, wobei die Überprüfungseinheit (190) derart ausgebildet ist, eine Berechtigungsinformation für ein einzelnes Anwendungsprogramm (310, 311, 312) oder für eine Gruppe von Anwendungsprogrammen auf dem Gerät (300) anzuwenden.

12. Sensor eines Feldgerätes einer Automationsanlage zur nutzungsbeschränkten Bereitstellung von Sensordaten, wobei der Sensor (110, 120, 131, 132, 141-144) eine Überprüfungseinheit (190) aufweist, die derart ausgebildet ist, mindestens eine bereitgestellte Berechtigungsinformation zu überprüfen, Konfigurationsparameter des Sensors (110, 120, 131, 132, 141-144) abhängig von der mindestens einen Berechtigungsinformation einzurichten, und die Sensordaten mit einer den Konfigurationsparametern entsprechenden Güte auszugeben, wobei die mindestens eine Berechtigungsinformation kryptographisch geschützt bereitgestellt wird und die Überprüfungseinheit (190) eine kryptographische Funktion enthält, die die mindestens eine kryptographisch geschützte Berechtigungsinformation verifiziert und lediglich bei positiver Verifizierung der mindestens einen kryptographisch geschützten Berechtigungsinformation, wobei ein Aussteller und ein Inhalt der mindestens einen Berechtigungsinformation überprüft werden, die mindestens eine Berechtigungsinformation zum Einrichten der Konfigurationsparameter bereitstellt.

## Claims

1. Method for the restricted-use provision of sensor data by at least one sensor (110, 120, 131, 132, 141-144) of a field device of an automation system (100, 200, 300), comprising
- providing (10) at least one item of authorization information,
- checking (20) the at least one item of authorization information provided,
- setting up (30) at least one configuration parameter of the at least one sensor (110, 120, 131, 132, 141-144) on the basis of the at least one item of authorization information provided, and
- outputting (40) sensor data (110, 120, 131, 132, 141-144) corresponding to the configuration parameters, in particular to an application program, wherein the at least one configuration parameter stipulates a quality of the sensor data provided by the sensor (110, 120, 131, 132, 141-144), wherein the at least one item of authorization information is provided in a cryptographically protected manner, and the at least one item of authorization information for setting up the configuration parameters is provided only if the at least one item of cryptographically protected authorization information is positively verified, wherein an issuer and a content of the at least one item of authorization information are checked.

2. Method according to Claim 1, wherein only data corresponding to the set configuration parameters or quality are detected by at least one sensor (110, 120, 131, 132, 141-144) .

3. Method according to one of the preceding claims, wherein sensor data corresponding to its maximum configuration parameters are detected by at least one sensor (110, 120, 131, 132, 141-144) and only the output of the sensor data (110, 120, 131, 132, 141-144) is restricted to the set configuration parameters or quality.

4. Method according to one of the preceding claims, wherein the quality of the sensor data relates to a supported measurement range and/or a usable measurement rate and/or a depth of representation of the sensor data and/or preprocessing of the sensor data which has been carried out and/or at least one visual display parameter and/or calibration of the sensor data and/or temperature-stabilized sensor data.

5. Method according to one of the preceding claims, wherein a plurality of items of authorization information are simultaneously provided by different application programs for a single sensor (110, 120, 131, 132, 141-144).

6. Method according to one of the preceding claims, wherein at least one item of authorization information is associated with an application program and is provided with the provision of the application program on the device (100, 200, 300).

7. Field device of an automation system for the restricted-use provision of sensor data, comprising
- at least one sensor (110, 120, 131, 132, 141-144) which provides sensor data of different quality on the basis of at least one configuration parameter which has been set up, and
- a checking unit (190) which is designed to provide at least one item of authorization information and to check at least one item of authorization information provided and to set up configuration parameters of the at least one sensor (110, 120, 131, 132, 141-144) on the basis of the at least one item of authorization information, wherein the at least one item of authorization information is provided in a cryptographically protected manner, and the checking unit (190) contains a cryptographic function which verifies the at least one item of cryptographically protected authorization information and provides the at least one item of authorization information for setting up the configuration parameters only if the at least one item of cryptographically protected authorization information is positively verified, wherein an issuer and a content of the at least one item of authorization information are checked, and wherein the checking unit (190) is also designed to output sensor data corresponding to the configuration parameters, in particular to an application program, wherein the at least one configuration parameter stipulates a quality of the sensor data provided by the at least one sensor (110, 120, 131, 132, 141-144).

8. Field device of an automation system according to Claim 7, wherein at least one sensor (110, 120, 131, 132, 141-144) detects only data on the basis of the configuration parameters which have been set and/or at least one sensor (110, 120, 131, 132, 141-144) detects sensor data according to its maximum configuration parameters and restricts only output of the sensor data to the set configuration or quality.

9. Field device of an automation system according to one of Claims 7 to 8, wherein a sensor (110, 120, 131, 132, 141-144) has its own checking unit (190) which is assigned in a dedicated manner, and the checking unit (190) provides the authorization information for setting up configuration parameters only if the cryptographically protected authorization information is positively verified.

10. Field device of an automation system according to one of Claims 7 to 9, wherein a checking unit (190) evaluates authorization information for a plurality of sensors (110, 120, 131, 132, 141-144) and such a checking unit (190) is formed in a control unit (160) remote from the sensors (110, 120, 131, 132, 141-144).

11. Field device of an automation system according to one of Claims 7 to 10, wherein the checking unit (190) is designed to use an item of authorization information for an individual application program (310, 311, 312) or for a group of application programs on the device (300).

12. Sensor of a field device of an automation system for the restricted-use provision of sensor data, wherein the sensor (110, 120, 131, 132, 141-144) has a checking unit (190) which is designed to check at least one item of authorization information provided, to set up configuration parameters of the sensor (110, 120, 131, 132, 141-144) on the basis of the at least one item of authorization information, and to output the sensor data with a quality corresponding to the configuration parameters, wherein the at least one item of authorization information is provided in a cryptographically protected manner, and the checking unit (190) contains a cryptographic function which verifies the at least one item of cryptographically protected authorization information and provides the at least one item of authorization information for setting up the configuration parameters only if the at least one item of cryptographically protected authorization information is positively verified, wherein an issuer and a content of the at least one item of authorization information are checked.

## Revendications

1. Procédé de préparation privative de données de capteur par au moins un capteur (110, 120, 131, 132, 141-144) d'un appareil de terrain d'une installation d'automatisme (100, 200, 300), comprenant
- une préparation (10) d'au moins une information d'autorisation,
- une vérification (20) de l'au moins une information d'autorisation préparée,
- un établissement (30) d'au moins un paramètre de configuration de l'au moins un capteur (110, 120, 131, 132, 141-144) en fonction de l'au moins une information d'autorisation préparée et
- l'envoi (40) de données de capteur (110, 120, 131, 132, 141-144) correspondant aux paramètres de configuration, en particulier à un programme d'application, dans lequel l'au moins un paramètre de configuration définit une qualité des données de capteur préparées par le capteur (110, 120, 131, 132, 141-144), dans lequel l'au moins une information d'autorisation est préparée protégée de manière cryptographique et uniquement lorsque l'au moins une information d'autorisation protégée de manière cryptographique est vérifiée de manière positive, un émetteur et un contenu de l'au moins une information d'autorisation étant vérifiés, l'au moins une information d'autorisation est préparée pour établir les paramètres de configuration.

2. Procédé selon la revendication 1, dans lequel seules des données correspondant aux paramètres de configuration, respectivement la qualité, établis d'au moins un capteur (110, 120, 131, 132, 141-144) sont détectées.

3. Procédé selon l'une des revendications précédentes, dans lequel des données de capteur correspondant à son paramètre de configuration maximal d'au moins un capteur (110, 120, 131, 132, 141-144) sont détectées et seule l'émission des données de capteur (110, 120, 131, 132, 141-144) est limitée aux paramètres de configuration, respectivement la qualité, établis.

4. Procédé selon l'une des revendications précédentes, dans lequel la qualité des données de capteur concerne une plage de mesure supportée et/ou une cadence de mesure utile et/ou une profondeur de représentation des données de capteur et/ou un pré-traitement réussi des données de capteur et/ou au moins un paramètre de représentation visuel et/ou un calibrage des données de capteur et/ou des données de capteur stabilisées en température.

5. Procédé selon l'une des revendications précédentes, dans lequel pour un seul capteur (110, 120, 131, 132, 141-144), plusieurs informations d'autorisation sont préparées simultanément par différents programmes d'application.

6. Procédé selon l'une des revendications précédentes, dans lequel au moins une information d'autorisation est reliée à un programme d'application et est préparée avec la préparation du programme d'application sur l'appareil (100, 200, 300).

7. Appareil de terrain d'une installation d'automatisme pour la préparation privative de données de capteur, comprenant
- au moins un capteur (110, 120, 131, 132, 141-144) qui prépare des données de capteur de qualité différente, en fonction d'au moins un paramètre de configuration établi et
- une unité de vérification (190) qui est conçue pour préparer au moins une information d'autorisation, et pour vérifier au moins une information d'autorisation préparée, et pour établir des paramètres de configuration de l'au moins un capteur (110, 120, 131, 132, 141-144) en fonction de l'au moins une information d'autorisation, dans lequel l'au moins une information d'autorisation est préparée protégée de manière cryptographique et l'unité de vérification (190) comporte une fonction cryptographique qui vérifie l'au moins une information d'autorisation protégée de manière cryptographique et uniquement lorsque l'au moins une information d'autorisation protégée de manière cryptographique est vérifiée de manière positive, un émetteur et un contenu de l'au moins une information d'autorisation étant vérifiés, l'au moins une information d'autorisation est préparée pour établir les paramètres de configuration, dans lequel l'unité de vérification (190) est en outre conçue pour envoyer des données de capteur correspondant aux paramètres de configuration, en particulier à un programme d'application, dans lequel l'au moins un paramètre de configuration définit une qualité des données de capteur préparées par l'au moins un capteur (110, 120, 131, 132, 141-144).

8. Appareil de terrain d'une installation d'automatisme selon la revendication 7, dans lequel au moins un capteur (110, 120, 131, 132, 141-144) détecte uniquement des données en fonction des paramètres de configuration établis et/ou au moins un capteur (110, 120, 131, 132, 141-144) détecte des données de capteur correspondant à son paramètre de configuration maximal et limite uniquement une émission des données de capteur à la configuration respectivement qualité établie.

9. Appareil de terrain d'une installation d'automatisme selon l'une des revendications 7 à 8, dans lequel un capteur (110, 120, 131, 132, 141-144) présente une propre unité de vérification (190) attribuée de manière dédiée et l'unité de vérification (190) prépare l'information d'autorisation pour établir des paramètres de configuration uniquement lorsque l'information d'autorisation protégée de manière cryptographique est vérifiée de manière positive.

10. Appareil de terrain d'une installation d'automatisme selon l'une des revendications 7 à 9, dans lequel une unité de vérification (190) évalue une information d'autorisation pour plusieurs capteurs (110, 120, 131, 132, 141-144) et une telle unité de vérification (190) est conçue dans une unité de commande (160) séparée des capteurs (110, 120, 131, 132, 141-144) .

11. Appareil de terrain d'une installation d'automatisme selon l'une des revendications 7 à 10, dans lequel l'unité de vérification (190) est conçue pour appliquer une information d'autorisation pour un programme d'application (310, 311, 312) individuel ou pour un groupe de programmes d'application sur l'appareil (300).

12. Capteur d'un appareil de terrain d'une installation d'automatisme pour la préparation privative de données de capteur, dans lequel le capteur (110, 120, 131, 132, 141-144) présente une unité de vérification (190) qui est conçue pour vérifier au moins une information d'autorisation préparée, pour établir des paramètres de configuration du capteur (110, 120, 131, 132, 141-144) en fonction de l'au moins une information d'autorisation, et envoyer les données de capteur avec une qualité correspondant aux paramètres de configuration,
dans lequel l'au moins une information d'autorisation est préparée protégée de manière cryptographique et l'unité de vérification (190) comporte une fonction cryptographique qui vérifie l'au moins une information d'autorisation protégée de manière cryptographique et uniquement lorsque l'au moins une information d'autorisation protégée de manière cryptographique est vérifiée de manière positive, un émetteur et un contenu de l'au moins une information d'autorisation étant vérifiés, l'au moins une information d'autorisation est préparée pour établir les paramètres de configuration.
